Europäisches Patentamt

European Patent Office

Office européen des brevets

(19)

(11) Numéro de publication : **0 361 606 B1**

(12) ## FASCICULE DE BREVET EUROPEEN

(45) Date de publication du fascicule du brevet :
**21.12.94 Bulletin 94/51**

(51) Int. Cl.$^5$ : **G01S 7/52**

(21) Numéro de dépôt : **89202401.9**

(22) Date de dépôt : **25.09.89**

(54) Dispositif de traitement amélioré d'un signal échographique.

(30) Priorité : **30.09.88 FR 8812804**

(43) Date de publication de la demande :
**04.04.90 Bulletin 90/14**

(45) Mention de la délivrance du brevet :
**21.12.94 Bulletin 94/51**

(84) Etats contractants désignés :
**DE FR GB**

(56) Documents cités :
**EP-A- 0 146 182**
**EP-A- 0 206 290**
**WO-A-86/03594**

(73) Titulaire : **LABORATOIRES D'ELECTRONIQUE PHILIPS**
**3, Avenue Descartes**
**F-94450 Limeil-Brévannes (FR)**

(84) **FR**
Titulaire : **N.V. Philips' Gloeilampenfabrieken**
**Groenewoudseweg 1**
**NL-5621 BA Eindhoven (NL)**

(84) **DE GB**

(72) Inventeur : **Bonnefous, Odile**
**Société Civile S.P.I.D.**
**209, rue de L'Université**
**F-75007 Paris (FR)**

(74) Mandataire : **Charpail, François et al**
**Société Civile S.P.I.D.**
**156, Boulevard Haussmann**
**F-75008 Paris (FR)**

EP 0 361 606 B1

## Description

La présente invention concerne un dispositif de traitement d'un signal échographique $S_o(t)$.

L'invention trouve une application particulièrement advantageuse dans le domaine de l'échographie médicale, et plus particulièrement dans celui de la formation d'images d'organes.

Le problème technique général que doit résoudre tout dispositif de traitement d'un signal échographique consiste, le plus souvent, à obtenir une image aussi exacte que possible du milieu soumis à exploration, quant à ses contours et aux parois spéculaires qu'il contient.

Diverses solutions à ce problème technique général ont déjà été proposées par le passé. Citons, en particulier, l'article de M. Fink "Imagerie ultrasonore" paru dans le Journal de Physique Appliquée 18 (1983) p. 527-556, qui analyse de façon exhaustive les divers aspects de la formation échographique d'images. Toutes les solutions connues de l'état de la technique, si elles conduisent à des résultats souvent satisfaisants, présentent pourtant certaines limites. En effet, la détermination des contours d'organes et la détection d'objets faiblement contrastés sont perturbées par les interférences constructives et destructives des échos produits par les multidiffuseurs contenus dans le milieu étudié, ceci en relation avec le caractère cohérent de l'onde ultrasonore émise par le transducteur piézoélectrique. Ce phénomène parasite est analogue, dans le domaine acoustique, à celui connu sous le nom de "speckle" dans le domaine optique et qui donne lieu aux "grains de lumière" que l'on rencontre souvent associés à l'émission laser. Les principaux inconvénients de ce bruit d'interférence dans le domaine ultrasonore sont, d'une part, une dégradation de la qualité des images échographiques, notamment une perte de visibilité en régime de faibles contrastes, et, d'autre part, une bande de fréquence large et une forte variance qui rendent inefficaces les procédés usuels de détection de contour.

Il est donc clair que la réduction du "speckle" est déterminante pour l'amélioration de la qualité des images échographiques. Dans ce but, différentes méthodes ont été envisagées :

- d'une part, celles qui consistent à traiter le signal avant acquisition, de façon à obtenir une décorrélation du "speckle". C'est, par exemple, la composition spatiale (voir l'article de C.B. Burkhardt, dans IEEE Trans. Sonics Ultrasonics, SU25 1-6 (1978)). Cette méthode conduit en général à des images échographiques de bonne qualité. Elle présente cependant l'inconvénient de nécessiter un dispositif de traitement électronique complexe et onéreux. De plus, le temps d'acquisition est relativement long, ce qui exclut la possibilité d'obtenir des images en temps réel.

A cette première catégorie de méthodes appartient celle décrite dans le document EP-A 0 206 290. Pour la réduction du "speckle" dans l'image, les étapes suivantes sont appliquées :

Par une modulation d'amplitude d'un signal qui est déduit du signal d'écho, il est produit un premier signal de sortie représentatif de l'information d'amplitude du signal d'écho. Par une modulation de fréquence ou de phase du signal qui est déduit du signal d'écho, il est produit un deuxième signal de sortie représentatif de l'information de fréquence ou de phase du signal d'écho. Les deux signaux de sortie sont ensuite combinés pour produire un signal d'image.

- d'autre part, il existe les méthodes de lissage après formation de l'image, comme, par exemple, l'utilisation d'un filtre passe-bas qui réduit effectivement les fluctuations dues au "speckle", mais introduit un flou dans les images en étalant les contours.

Aussi, le problème technique à résoudre par l'objet de la présente invention est de proposer un dispositif de traitement d'un signal échographique $S_o(t)$, qui serait du type "à traitement a posteriori du signal", mais qui réduirait l'effet de "speckle" de façon sensible tout en gardant des contours d'images nets.

Une solution à ce problème technique consiste, selon la présente invention, en ce que ledit dispositif qui comporte, de façon connue notamment du document EP-A 0 146 182, un échantillonneur donnant du signal échographique $S_o(t)$ N valeurs discrètes $C_{ok}$, k valant 1, 2, ..., N, comporte en outre :

- p unités de décomposition placées en cascade, chaque unité de décomposition comportant :

  * une voie de transmission basse fréquence comprenant, dans l'ordre, un filtre basse fréquence réalisant la corrélation du signal entrant $S_{j-1}(t)$ avec un filtre $h(t)$, dit filtre d'échelle, et un décimateur ne retenant qu'une valeur sur 2 par rapport à k du résultat de ladite corrélation, soit en tout les $N/2^j$ valeurs $C_{jk}$, pour k=1, $1+2^j$, $1+2 \times 2^j$, $1+3+2^j$,..., représentant $S_j(t)$, dite composante basse fréquence de $S_o(t)$ à l'ordre j,

  * une voie d'appauvrissement en haute fréquence comprenant, dans l'ordre, un filtre haute fréquence réalisant la corrélation du signal entrant $S_{j-1}(t)$ avec un filtre $g(t)$, dit filtre d'ondelette, et un décimateur ne retenant qu'une valeur sur 2 par rapport à k du résultat de ladite corrélation, soit en tout les $N/2^j$ valeurs $W_{jk}$, pour k=1, $1+2^j$, $1+2+2^j$, $1+3 \times 2^j$,..., stockées dans une mémoire et représentant $D_j(t)$, dite composante haute fréquence de $S_o(t)$ à l'ordre j, lesdits filtres basse fréquence et haute fréquence étant des filtres miroirs en quadrature,

- p unités de recomposition placées en cascade, chaque unité de recomposition comportant :

  * une voie d'enrichissement en haute fréquence comprenant, dans l'ordre, un circuit de comparaison de $|C'_{jk}/W_{jk}|$ à un seuil prédéterminé $A_j$, $C'_{jk}$ représentant les valeurs de $S'_j(t)$, signal recomposé à l'ordre j, ledit circuit de comparaison délivrant en sortie les $N/2^j$ valeurs de $W_{jk}$ si $|C'_{jk}/W_{jk}|<A_j$ pour tout k, ou $N/2^j$ zéros dans le cas contraire, un circuit de doublement d'échantillonnage intercalant un zéro entre deux valeurs consécutives du signal délivré par le circuit de comparaison, et un circuit de convolution haute fréquence réalisant la convolution du signal issu du circuit de doublement d'échantillonnage avec le filtre d'ondelette g(t),

* une voie de recomposition proprement dite comprenant, dans l'ordre, un circuit de doublement d'échantillonnage intercalant un zéro entre deux valeurs consécutives des $C'_{jk}$, un circuit de convolution basse fréquence réalisant la convolution du signal issu du circuit de doublement d'échantillonnage avec le filtre d'échelle h(t), et un additionneur donnant le signal $S'_{j-1}(t)$ recomposé à l'ordre j-1, en faisant la somme des signaux sortant des circuits de convolution haute et basse fréquence.

Les filtres miroirs en quadrature sont connus, par exemple, de l'article, non encore publié mais joint à la présente demande, "A Theory for Multiresolution Signal Decomposition : the Wavelet Representation" de S.G. Mallat. Soient H(f) et G(f) deux de tels filtres dans le domaine des fréquences f. Par définition, ils vérifient les relations :

$$G(f) = \exp(-2\pi f)\overline{H}(f + F_e/2) \quad (1)$$
$$H^2(f) + G^2(f) = 1 \quad (2)$$

$F_e$ étant la fréquence d'échantillonnage.

Comme le montre la relation (2), les filtres miroirs en quadrature ont la propriété avantageuse de se compléter en énergie, le signal étant conservé dans son intégralité même après avoir été traité par lesdits filtres. C'est pourquoi il faut noter dès à présent que le dispositif de traitement selon l'invention fonctionne de façon rigoureuse, sans approximation ni perte d'information.

Dans le domaine temporel, auxdits filtres G(f) et H(f) correspondent les filtres g(t) et h(t). Si H(f) est un filtre passe bas, il est significatif de la taille des objets soumis à exploration, on appelle alors H(f) et h(t) filtres d'échelle. A l'inverse, si G(f) est un filtre passe haut, il est représentatif des composantes haute fréquence de l'image observée, G(f) et g(t) sont alors appelés filtres d'ondelette.

L'action des filtres d'échelle et d'ondelette peut se résumer ainsi. Le signal échographique à analyser $S_o(t)$ est échantillonné sur N valeurs $C_{ok}$ selon un certain pas d'échantillonnage. Les filtres g(t) et h(t) sont également échantillonnés au même pas sur un certain nombre n de valeurs, plus petit que N. La relation précédente (1) se traduit alors par : $g_l=(-1)^{1-l}h_{1-l}$. Le filtre basse fréquence et le décimateur effectuent une opération de corrélation au filtre d'échelle suivie de la suppression d'une sur deux des valeurs obtenues, opération qui s'exprime par la relation :

$$C_{1k} = \Sigma_l \, C_{o,l+2k} \, h_l$$

la sommation étant faite sur n valeurs de l.

D'une façon générale à l'ordre j, on a :

$$C_{jk} = \Sigma_l \, C_{j-1,l+2k} \, h_l$$

$C_{jk}$ sont les paramètres d'échelle à l'ordre de décomposition j. De même, l'effet global du filtre haute fréquence et du décimateur est de calculer les paramètres d'ondelettes $W_{jk}$ à l'ordre j, donnés par :

$$W_{jk} = \Sigma_l \, C_{j-1,l+2k} \, g_l$$

On voit donc qu'à chaque passage par une unité de décomposition, le signal $S_j(t)$, représenté par $C_{jk}$, s'appauvrit de ses composantes les plus élevées en fréquence, les fréquences extraites étant chaque fois plus basses.

On peut donner des paramètres d'échelle $C_{jk}$ et d'ondelette $W_{jk}$ une autre interprétation que celle de grandeurs résultant de la corrélation avec les filtres h(t) et g(t). En effet, la théorie des filtres miroirs en quadrature rappelée plus haut, ainsi par l'article de I. Daubechies, "Orthoromal Bases of Compactly Supported Wavelets", non encore publié mais joint à la présente demande, enseignent qu'aux filtres d'échelle et d'ondelette h(t) et g(t) peuvent être associées des fonctions $\phi(t)$ et $\psi(t)$ appelées fonctions d'échelle et d'ondelette reliées aux filtres g(t) et h(t) par :

$$\Phi(t) = \prod_p \, x \, h(2^p t)$$

$$\psi(t) = g(2t) \, x \, \phi(2t)$$

x représentant le produit de convolution.

A partir des fonctions d'échelle et d'ondelette $\phi(t)$ et $\psi(t)$, on peut construire des bases orthonormées de fonctions $\phi_{jk}(t)$ et $\psi_{jk}(t)$ définies par :

$$\phi_{jk}(t) = 1/\sqrt{2^j} \, \phi((t - 2^j k)/2^j)$$

et

$$\psi_{jk}(t) = 1/\sqrt{2^j} \, \psi((t - 2^j k)/2^j)$$

On montre alors que $C_{jk}$ est la projection du signal $S_o(t)$ sur la fonction de base $\phi_{jk}(t)$:

$$C_{jk} = <S_o(t),\phi_{jk}(t)> = \int S_o(t)\phi_{jk}(t)dt$$

qui vaut aussi :

$$C_{jk} = <S_{j-1}(t),\phi_{jk}(t)> = \int S_{j-1}(t)\phi_{jk}(t)dt$$

De la même manière, on montre que $W_{jk}$ est la projection de $S_o(t)$ sur la fonction $\psi_{jk}(t)$ :

$$W_{jk} = <S_o(t),\psi_{jk}(t)> = \int S_o(t)\psi_{jk}(t)dt$$

et

$$W_{jk} = <S_{j-1}(t),\psi_{jk}(t)> = \int S_{j-1}(t)\psi_{jk}(t)dt$$

La phase de recomposition du signal procède de façon inverse à la décomposition. A chaque unité de recomposition, le signal en cours de recomposition est enrichi de ses composantes $W_{jk}$ haute fréquence, conservées en mémoire lors de la décomposition. Toutefois, cet enrichissement se fait sous condition :

il faut que pour tout k le rapport $|C'_{jk}/W_{jk}|$ soit inférieur à un seuil $A_j$. $C'_{jk}$ représente le signal recomposé à l'ordre j-1, $C'_{jk}$ diffère de $C_{jk}$ si, à un stade donné de la recomposition, l'enrichissement en haute fréquence ne s'est pas effectué du fait que la condition ci-dessus n'était pas vérifiée. En d'autres termes,chaque voie d'enrichissement en haute fréquence fournit les paramètres $W_{jk}'$ donnés par

$W_{jk}'=W_{jk}$ si pour tout k $|C'_{jk}/W_{jk}|<A_j$

$W_{jk}=0$ dans le cas contraire

Cette recomposition conditionnelle des fréquences est essentielle. En effet, on dispose ainsi de p seuils $A_j$ que l'on peut ajuster de façon indépendante et à volonté en fonction du traitement que l'on désire effectuer sur le signal échographique. Par exemple, pour éliminer des détails haute fréquence (ordre j=1) et exalter des contours (ordre 4 par exemple), on fixera un seuil $A_1$ bas et un seuil $A_4$ élevé. C'est de cette manière que l'on peut réduire de façon très sélective le "speckle" dont la texture correspond généralement à un ordre j=1. S'agissant du "speckle",on peut trouver une estimation du seuil $A_1$. En effet, le rapport $|C'_{1k}/W_{1k}|$ s'analyse en terme de rapport signal-/bruit, or on sait de la théorie que le rapport signal-/bruit du "speckle" vaut 1,91. Pour éliminer le "speckle", on appliquera donc un seuil $A_1$ de 1,91 ou 2. D'une façon plus générale, on peut classer les objets d'une image échographique en fonction de leur ordre j:

```
speckle     ordre   j=1
parois              1
texture             2
kistes              2,3
objets anatomiques  3,4
```

Si on veut favoriser de gros objets tels les kistes, on placera un seuil bas dans les ordres bas et un seuil élevé dans les ordres élevés, par exemple $A_1=2$, $A_2=3, A_3=4$. Par contre, si on veut favoriser les parois, on placera un seuil élevé à l'ordre 1.

L'action conjuguée du doublement d'échantillonnage et de la convolution basse fréquence avec le filtre d'échelle h(t) s'exprime par le passage des coefficients $C'_{j+1,k}$ aux coefficients $C'_{jk}$ défini, suivant la parité de k, par

$C'_{j2k} = \Sigma_l \, C'_{j+1,k+l} \, h_{2l}$ pour k pair

$C'_{j2k+1} = \Sigma_l \, C'_{j+1,k+l+1} \, h_{2l+1}$, pour k impair

De la même manière, l'effet du doublement d'échantillonnage et de la convolution haute fréquence avec le filtre d'ondelette g(t) s'écrit :

$W'_{j2k} = \Sigma_l \, W_{j+1,k+l} \, g_{2l}$ pour k pair

$W'_{j2k+1} = \Sigma_l \, W_{j+1,k+l+1} \, g_{2l+1}$ pour k impair

Ainsi le signal recomposé à l'ordre j, $S'_j(t)$, peut être développé sur les fonctions de base $\phi_{jk}(t)$ et $Y_{jk}(t)$ sous la forme:

$S'_j(t) = \Sigma_k C'_{j+1,k}\phi_{j+1,k}(t) + \Sigma_k W'_{j+1,k}\psi_{j+1,k}(t)$

Cette dernière relation donne une signification physique aux fonctions de base d'échelle et d'ondelette : ce sont les fonctions sur lesquels se décomposent les signaux reconstitués. Cette remarque importante permet de trouver un critère dans le choix des filtres g(t) et h(t) dont on n'a imposé jusqu'à présent que leur nature de filtres miroirs en quadrature, sans en préciser la forme. Connaissant l'allure du signal échographique initial $S_o(t)$, on choisira la fonction d'échelle $\phi(t)$ qui se rapproche le plus de l'enveloppe de $S_o(t)$. On en déduira la fonction d'ondelette $\psi(t)$ en appliquant la règle d'orthogonalité :

$<\phi(t),\psi(t) = \int\phi(t)\psi(t)dt = 0$

$\phi(t)$ et $\psi(t)$ serviront de base à la construction des fonctions $\phi_{jk}(t)$ et $\psi_{jk}(t)$. La forme des filtres g(t) et h(t) sera ensuite tirée des relations données plus haut, reliant $\phi(t)$ et $\psi(t)$ à g(t) et h(t).

La description qui va suivre en regard des dessins annexés, donnés à titre d'exemples non limitatifs, fera bien comprendre en quoi consiste l'invention et comment elle peut être réalisée.

La figure 1 donne la première partie du schéma d'un dispositif de traitement selon l'invention.

La figure 2 donne la deuxième partie du schéma du dispositif de traitement dont la première partie est montrée à la figure 1.

Les figures 3a et 3b représentent respectivement un exemple de fonction d'échelle $\phi(t)$ et de fonction d'ondelette $\psi(t)$.

La figure 4 montre les phases successives de décomposition jusqu'à l'ordre 3 d'un signal $S_o(t)$ à l'aide des fonctions d'échelle et d'ondelette de la figure 3.

La figure 5 donne un exemple de reconstitution du signal $S_o(t)$ de la figure 4.

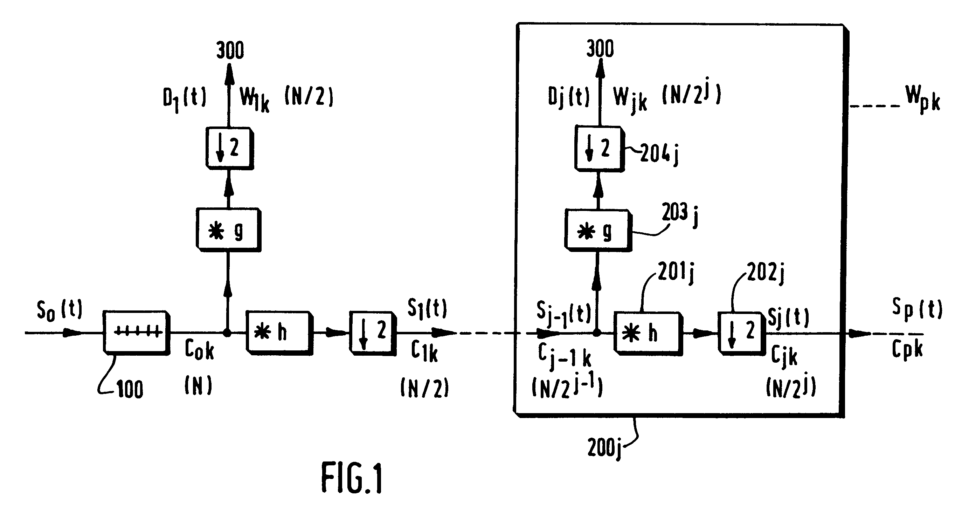

La figure 1 montre la première partie du schéma d'un dispositif de traitement d'un signal échographique $S_o(t)$ comportant un échantillonneur 100 qui donne, du signal d'entrée $S_o(t)$,N valeurs discrètes $C_{ok}$, k valant 1, 2,...,N. Le signal $S_o(t)$, ainsi échantillonné, est traité successivement par p unités $200_j$ de décomposition placées en cascade. Chaque unité de décomposition comporte deux voies: une voie de transmission basse fréquence et une voie d'appauvrissement en haute fréquence, les p voies de transmission basse fréquence successives étant disposées en série l'une par rapport à l'autre. Chaque voie de transmission basse fréquence comprend un filtre basse fréquence $201_j$ réalisant la corrélation du signal entrant $S_{j-1}(t)$, composante basse fréquence de $S_o(t)$ à l'ordre j-1, avec un filtre h(t), dit filtre d'échelle. Comme indiqué plus haut, le filtre h(t) est construit à partir d'une fonction d'échelle $\phi(t)$ choisie de façon appropriée, et est échantillonné, au même pas d'échantillonnage que $S_o(t)$, sur un nombre n de points, n valant de 4 à 20 ce qui permet une implantation aisée du filtre h(t).

Le filtre $201_j$ fournit donc en sortie les coefficients $C_{jk}$ dont un décimateur $202_j$ ne retient qu'une valeur sur 2. Ainsi, la voie de transmission basse fréquence de l'unité de décomposition $200_j$ fournit $N/2^j$ coefficients $C_{jk}$ représentant $S_j(t)$, composante basse fréquence de $S_o(t)$ à l'ordre j, k étant égal à 1, $1+2^j$, $1+2x2^j$, $1+3x2^j$,...

Le nombre p d'unités de décomposition est donc fini et vaut au maximum logN/log2, étant entendu que l'on peut limiter p à un nombre quelconque sans que cela n'affecte ultérieurement la recomposition du signal.

La voie d'appauvrissement en haute fréquence comprend, de manière analogue, un filtre haute fréquence $203_j$ qui réalise la corrélation du signal entrant $S_{j-1}(t)$ avec un filtre d'ondelette g(t), les filtres h(t) et g(t) étant des filtres miroirs en quadrature. Un décimateur $204_j$ ne retient qu'une valeur sur 2 de résultat de la corrélation, soit en tout les $N/2^j$ valeurs $W_{jk}$ représentant $D_j(t)$, composante haute fréquence de $S_o(t)$ à l'ordre j. Contrairement aux coefficients $C_{jk}$ qui sont utilisés d'une unité de décomposition à l'autre, les coefficients $W_{jk}$ sont stockés dans une mémoire 300 pour utilisation ultérieure. La décomposition se poursuit ainsi jusqu'à l'ordre p.

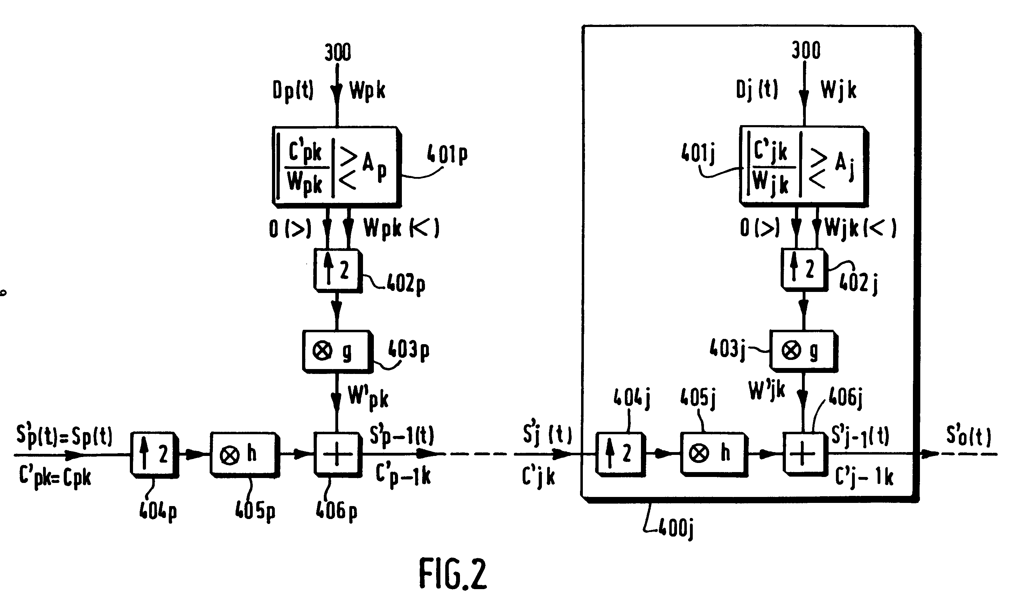

La figure 2 montre maintenant la deuxième partie du schéma du dispositif de traitement relative à la recomposition du signal. De façon symétrique à la décomposition, le dispositif de traitement comporte p unités $400_j$ de recomposition placées en cascade. Chaque unité $400_j$ de recomposition comporte deux voies : une voie d'enrichissement en haute fréquence et une voie de recomposition proprement dite, les p voies de recomposition successives étant disposées en série l'une par rapport à l'autre. Chaque voie d'enrichissement en haute fréquence comprend un circuit $401_j$ de comparaison des quantités $\left|C'_{jk}/W_{jk}\right|$ à un seuil prédéterminé $A_j$, $C'_{jk}$ représentant les valeurs du signal entrant $S'_j(t)$, signal recomposé à l'ordre j. Si pour tout k $\left|C'_{jk}/W_{jk}\right|$ est inférieur à $A_j$, le circuit $401_j$ de comparaison délivre en sortie les $N/2^j$ coefficients $W_{jk}$ stockés dans la mémoire 300. Si le résultat de la comparaison est inverse, le circuit $401_j$ de comparaison ne délivre que des zéros. Un circuit $402_j$ de doublement d'échantillonnage fait passer le nombre d'échantillons de $N/2^j$ à $N/2^{j-1}$ en intercalant un zéro entre deux valeurs consécutives du signal délivré par le circuit $401_j$ de comparaison. Enfin, un circuit $403_j$ de convolution haute fréquence réalise la convolution du signal issu du circuit $402_j$ de doublement échantillonnage avec le filtre d'ondelette g(t).

La voie de recomposition proprement dite comprend également un circuit $404_j$ de doublement d'échantillonnage qui intercale un zéro entre deux valeurs consécutives des $C'_{jk}$. Le signal provenant du circuit $404_j$ de doublement d'échantillonnage est convolué au filtre d'échelle h(t) par un circuit $405_j$ de convolution basse fréquence. Finalement, un additionneur $406_j$ donne le signal $S'_{j-1}(t)$ recomposé à l'ordre j-1 en faisant la somme des signaux sortant des circuits $403_j$, $405_j$ de convolution haute et basse fréquence. Les fréquences réinjectées par chaque unité $400_j$ de recomposition sont à chaque fois de plus en plus élevées. Le processus de recomposition se poursuit jusqu'à obtenir $S'_o(t)$. Si tous les coefficients $W_{jk}$ étaient recomposés avec les $C'_{jk}$, on aurait $C'_{jk}=C_{jk}$ et $S'_o(t)=S_o(t)$.

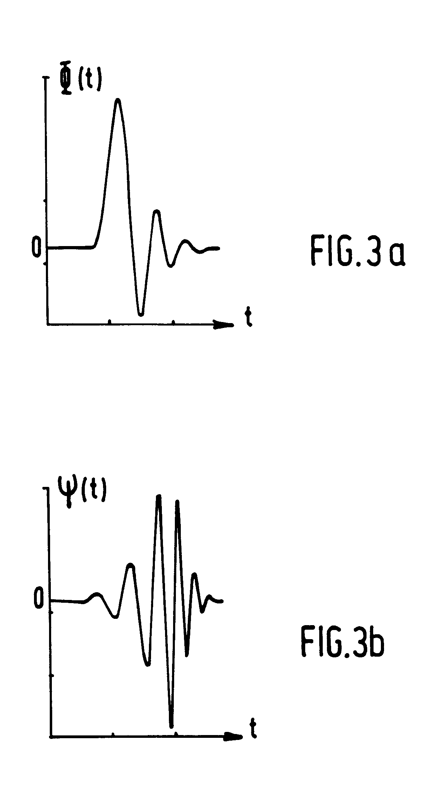

Les figures 3a et 3b donnent des exemples de fonctions d'échelle et d'ondelette $\phi(t)$ et $\psi(t)$ utilisables pour la décomposition et la recomposition d'un signal échographique. Ces fonctions sont tirées de l'article de I. Daubechies cité plus haut qui en donnent également de nombreux autres exemples.

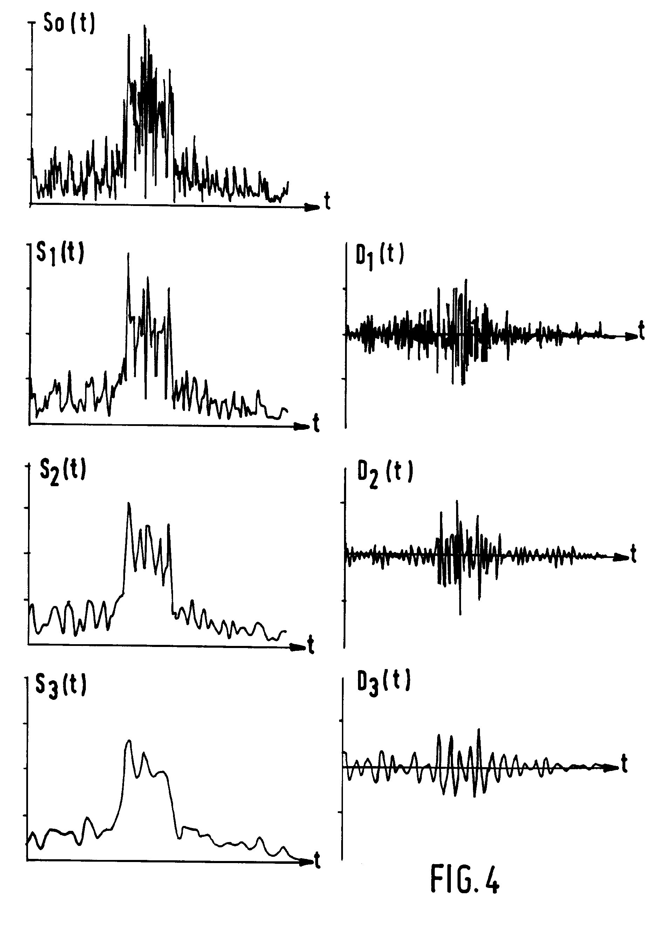

La figure 4 montre les étapes successives de la décomposition jusqu'à l'ordre j=3 d'un signal échographique $S_o(t)$ à l'aide des fonctions $\phi(t)$ et $\psi(t)$ de la figure 3. On constate clairement qu'à chaque fois le signal $S_j(t)$ s'appauvrit effectivement en hautes fréquences, lesquelles sont conservées dans les signaux $D_j(t)$.

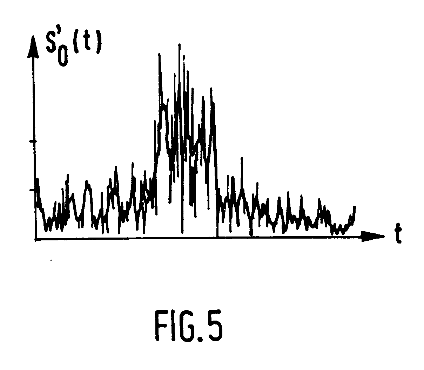

La figure 5 montre le résultat $S'_o(t)$, en trait fort, de la recomposition provenant des signaux $S_j(t)$ et $D_j(t)$ de la figure 4 lorsqu'on applique les seuils $A_1=2$, $A_2=3$, $A_3=4$. Le signal initial $S_o(t)$ est indiqué en trait fin. On vérifie sur cette figure que le signal $S'_o(t)$ est débarassé du "speckle", ce qui n'exclut cependant pas la présence de hautes fréquences, par exemple, au passage des parois.

## Revendications

1. Dispositif de traitement d'un signal échograpique $S_o(t)$, comportant un échantillonneur (100) donnant du signal échographique $S_o(t)$ N valeurs discrètes $C_{ok}$, k valant 1, 2, ..., N, caractérisé en ce qu'il comporte en outre :

   - p unités (200j, j=1,2,...,p) de décomposition placées en cascade, chaque unité (200j) de décomposition comportant :
     * une voie de transmission basse fréquence comprenant, dans l'ordre, un filtre basse fréquence (201j) réalisant la corrélation du signal entrant $S_{j-1}(t)$ avec un filtre h(t), dit filtre d'échelle, et un décimateur (202j) ne retenant qu'une valeur sur 2 par rapport à k du résultat de ladite corrélation, soit en tout les $N/2^j$ valeurs $C_{jk}$, pour k=1, $1+2^j$, $1+2x2^j$, $1+3+2^j$, ..., représentant $S_j(t)$, dite composante basse fréquence de $S_o(t)$ à l'ordre j,
     * une voie d'appauvrissement en haute fréquence comprenant, dans l'ordre, un filtre haute fréquence (203j) réalisant la corrélation du signal entrant $S_{j-1}(t)$ avec un filtre g(t), dit filtre d'ondelette, et un décimateur (204j) ne retenant qu'une valeur sur 2 par rapport à k du résultat de ladite corrélation, soit en tout les N/2$^j$ valeurs W$_{jk}$, pour k=1, 1+2$^j$, 1+2x2$^j$, 1+3x2$^j$, stockées dans une mémoire (300) et représentant D$_j$(t), dite composante haute fréquence de S$_o$(t) à l'ordre j, lesdits filtres basse fréquence (201j) et haute fréquence (203j) étant des filtres miroirs en quadrature,

- p unités (400j) de recomposition placées en cascade, chaque unité (400j) de recomposition comportant :

  * une voie d'enrichissement en haute fréuqence comprenant, dans l'ordre, un circuit (401j) de comparaison de $|C'_{jk}/W_{jk}|$ à un seuil prédéterminé A$_j$, C'$_{jk}$

    représentant les valeurs de S'$_j$(t), signal recomposé à l'ordre j, ledit circuit (401j) de comparaison délivrant en sortie les N/2$^j$ valeurs de W$_{jk}$ si $|C'_{jk}/W_{jk}|$<A$_j$ pour tout k, ou N/2$^j$ zéros dans le cas contraire, un circuit (402j) de doublement d'échantillonnage intercalant un zéro entre deux valeurs consécutives du signal délivré par le circuit (401j) de comparaison, et un circuit (403j) de convolution haute fréquence réalisant la convolution du signal issu du circuit (402j) de doublement d'échantillonnage avec le filtre d'ondelette g(t),

  * une voie de recomposition proprement dite comprenant, dans l'ordre, un circuit (404j) de doublement d'échantillonnage intercalant un zéro entre deux valeurs consécutives des C'$_{jk}$, un circuit (405j) de convolution basse fréquence réalisant la convolution du signal issu du circuit (404j) de doublement d'échantillonnage avec le filtre d'échelle h(t), et un additionneur (406j) donnant le signal S'$_{j-1}$(t) recomposé à l'ordre j-1, en faisant la somme des signaux sortant des circuits (403j,405j) de convolution haute et basse fréquence.


**Patentansprüche**

1. Gerät zum Verarbeiten eines Echographiesignals S$_o$(t), das einen Abtaster (100) enthält, der N diskrete Werte C$_{ok}$ des Echographiesignals S$_o$(t) liefert, worin k 1, 2...N beträgt und außerdem folgende Elemente enthält:

   - p kaskadengeschaltete Zerfallseinheiten (200j, j=1,2...p), wobei jede Einheit (200j) folgende Elemente enthält:

     * einen Niederfrequenzübertragungskanal, der aufeinanderfolgend ein Niederfrequenzfilter (201j), das die Korrelation des Eingangssignals S$_{j-1}$(t) mit einem Filter h(t) mit der Bezeichnung eines Skalenfilters verwirklicht, und einen Dezimator (202j) enthält, der nur einen von zwei Werten in bezug auf k des Ergebnisses der Korrelation, also insgesamt die N/2$^j$-Werte C$_{jk}$ festhält, wobei k=1, 1+2$^j$, 1+2x2$^j$, 1+3+2$^j$... ist, zur Darstellung von S$_j$(t), das mit der Niederfrequenzkomponente von S$_o$(t) der Ordnung j bezeichnet wird.

     * einen Hf Verarmungskanal, der aufeinanderfolgend ein Hochfrequenzfilter (203j), das die Korrelation des Eingangssignals S$_{j-1}$(t) mit einem Filter g(t) mit der Bezeichnung Welligkeitsfilter verwirklicht, und einen Dezimator (204j) enthält, der nur einen von zwei Werten in bezug auf k des Ergebnisses der Korrelation, d.h. insgesamt die N/2$^j$-Werte W$_{jk}$ festhält, worin k=1, 1+2$^j$, 1+2+2$^j$, 1+3x2$^j$... ist, die in einem Speicher (300) gespeichert sind und D$_j$(t) darstellen, das mit Hf-komponente von S$_o$(t) in der Ordnung j bezeichnet wird, wobei die Niederfrequenz- (201j) und Hochfrequenzfilter (203j) Quadraturspiegelfilter sind.

   - p kaskadengeschaltete Rekonstruktionseinheiten (400j), wobei jede Einheit (400j) folgende Elemente enthält:

     * einen Hf-Anreicherungskanal, der aufeinanderfolgend eine Schaltung (401j) zum Vergleichen $|C'_{jk}/W_{jk}|$ mit einer vorgegebenen Schwelle Aj, worin C'$_{jk}$ die Werte von S'$_j$(t) darstellt, die das rekonstruierte Signal der Ordnung j ist, wobei die Vergleichsschaltung (401j) die N/2$^j$-Werte von W$_{jk}$ ausgibt, wenn $|C'_{jk}/W_{jk}|$<A$_j$ für alle k-Werte oder N/2$^j$-Nullen im entgegengesetzten Fall sind, eine Schaltung (402j) zum Verdoppeln der Abtastung, die eine Null zwischen zwei aufeinanderfolgenden Werten des von der Vergleichsschaltung (401j) gelieferten Signals einfügt, und eine Hf Faltungsschaltung (403j) enthält, die die Faltung des von der Schaltung (402j) zum Verdoppeln der Abtastung mit dem Welligkeitsfilter g(t) gelieferten Signals verwirklicht,

     * einen momentanen Rekonstruktionskanal, der aufeinanderfolgend eine Schaltung (404j) zum Verdoppeln der Abtastung, die eine Null zwischen zwei auf-

einanderfolgenden Werten von $C'_{jk}$ einfügt, eine Nf-Faltungsschaltung (405j), die die Faltung des von der Schaltung (404j)zum Verdoppeln der Abtastung mit dem Skalenfilter h(t) gelieferten Signals verwirklicht, und einen Addierer (406j) enthält, der das rekonstruierte Signal $S'_{j-1}$(t) der Ordnung j-1 durch die Bildung der Summe der Ausgangssignale der Hf- und Nf-Faltungsschaltungen (403j, 504j) liefert.

## Claims

1. A device for processing an echographic signal $S_o$(t) comprising a sampling device (100) which supplies N discrete values $C_{ok}$ of the echographic signal $S_o$(t) where k is 1, 2, ..., N, characterized in that it also comprises:

   - p cascade-connected decomposition units (200j, j = 1, 2, ..., p), each decomposition unit (200j) comprising:

     * a low-frequency transmission channel which successively comprises a low-frequency filter (201j) which realises the correlation of the input signal $S_{j-1}$(t) with a filter h(t), referred to as a scaling filter, and a decimator (202j) which retains only one out of two values with respect to k of the result of said correlation, so in total the $N/2^j$ values $C_{jk}$ for k=1, $1+2^j$, $1+2\times2^j$, $1+3+2^j$, ..., representing $S_j$(t) which is referred to as the low-frequency component of $S_o$(t) of the order j,

     * a high-frequency reducing channel which successively comprises a high-frequency filter (203j) which realises the correlation of the input signal $S_{j-1}$(t) with a filter g(t), referred to as a wavelet filter, and a decimator (204j) which retains only one out of two values with respect to k of the result of said correlation, so in total the $N/2^j$ values $W_{jk}$ for k = 1, $1+2^j$, $1+2\times2^j$, $1+3\times2^j$, ..., stored in a memory (300) and representing $D_j$(t) which is referred to as the high-frequency component of $S_o$(t) of the order j, said low-frequency and high-frequency filters (201j) and (203j) being quadrature mirror filters,

   - p cascade-connected reconstruction units (400j), each reconstruction unit (400j) comprising:

     * a high-frequency enhancement channel which successively comprises a comparison circuit (401j) for comparing $|C'_{jk}/W_{jk}|$ with a predetermined thresh-

old $A_j$, $C'_{jk}$ representing the values of $S'_j$(t) which is the reconstructed signal of the order j, which comparison circuit (401j) outputs the $N/2^j$ values of $W_{jk}$ if $|C'_{jk}/W_{jk}| < A_j$ for all k, or $N/2^j$ zeros in the opposite case, a circuit (402j) for doubling the sampling which inserts a zero between two consecutive values of the signal supplied by the comparison circuit (401j), and a high-frequency convolution circuit (403j) which realises the convolution of the signal supplied by the circuit (402j) for doubling the sampling with the wavelet filter g(t),

     * an actual reconstruction channel which successively comprises a circuit (404j) for doubling the sampling which inserts a zero between two consecutive values of $C'_{jk}$, a low-frequency convolution circuit (405j) which realises the convolution of the signal supplied by the circuit (404j) for doubling the sampling with the scaling filter h(t), and an adder (406j) which supplies the reconstructed signal $S'_{j-1}$(t) of the order j-1 by forming the sum of the output signals of the high-frequency and low-frequency convolution circuits (403j, 405j).

FIG.1

FIG.2

FIG.3a

FIG.3b

FIG. 4

FIG.5